(19) Europäisches Patentamt European Patent Office Office européen des brevets

(11) **EP 3 806 634 B1**

(12) **EUROPEAN PATENT SPECIFICATION**

(45) Date of publication and mention of the grant of the patent:
**17.06.2026 Bulletin 2026/25**

(21) Application number: **19731273.9**

(22) Date of filing: **14.06.2019**

(51) International Patent Classification (IPC):
**A01N 25/04** (2006.01)   **A01N 25/30** (2006.01)
**A01N 65/24** (2009.01)   **A01N 65/12** (2009.01)
**A01N 65/44** (2009.01)   **A01N 65/28** (2009.01)
**A01P 13/00** (2006.01)

(52) Cooperative Patent Classification (CPC):
(C-Sets available)
**A01N 25/30; A01N 25/04**          (Cont.)

(86) International application number:
**PCT/EP2019/065745**

(87) International publication number:
**WO 2019/238948 (19.12.2019 Gazette 2019/51)**

(54) **BIO-HERBICIDE BASED ON ESSENTIAL OIL**

BIOHERBIZID BASIEREND AUF ÄTHERISCHEM ÖL

BIOHERBICIDE À BASE DE HUILE ESSENTIELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA TN**

(30) Priority: **14.06.2018 EP 18177658**

(43) Date of publication of application:
**21.04.2021 Bulletin 2021/16**

(73) Proprietor: **Gesval S.A.**
**4031 Liège (BE)**

(72) Inventors:
• **HAISSAM, Jijakli**
  **5361 Scy (BE)**
• **SIMON, Dal Maso**
  **6032 Mont-sur-Marchienne (BE)**
• **OLIVIER, Parisi**
  **5030 Gembloux (BE)**

(74) Representative: **Gevers Patents**
**De Kleetlaan 7A**
**1831 Diegem (BE)**

(56) References cited:
EP-A1- 2 735 229        EP-A1- 2 737 799
BR-A- PI0 700 941        CN-A- 104 472 570
CN-B- 101 385 559        US-A1- 2008 269 177
US-A1- 2009 099 022      US-A1- 2009 169 656
US-A1- 2014 023 733      US-A1- 2015 051 298

• **TERJUNG NINO ET AL: "Influence of droplet size on the efficacy of oil-in-water emulsions loaded with phenolic antimicrobials", FOOD & FUNCTION, vol. 3, no. 3, 1 January 2012 (2012-01-01), GB, pages 290 - 301, XP93027749, ISSN: 2042-6496, Retrieved from the Internet <URL:https://www.researchgate.net/profile/ Nino-Terjung-2/publication/51901424_Influence_ of_droplet_size_on_the_efficacy_of_oil-in-wate r_emulsions_loaded_with_phenolic_antimicrobi als/links/0a85e5333dc0931ab9000000/ Influence-of-droplet-size-on-the-efficacy-of-oi l-in-water-emulsions-loaded-with-phenolic-ant> DOI: 10.1039/C2FO10198J**

- **QIN KUIDE ET AL: "CONTROLLING DROPLET-SIZE DISTRIBUTION USING OIL EMULSIONS IN AGRICULTURAL SPRAYS", ATOMIZATION AND SPRAYS, vol. 20, no. 3, 1 January 2010 (2010-01-01), US, pages 227 - 239, XP093031278, ISSN: 1044-5110, Retrieved from the Internet <URL:http://dx.doi.org/10.1615/AtomizSpr.v20. i3.40> DOI: 10.1615/AtomizSpr.v20.i3.40**

Remarks:

The file contains technical information submitted after the application was filed and not included in this specification

(52) Cooperative Patent Classification (CPC): (Cont.)

C-Sets
**A01N 25/04, A01N 65/00, A01N 65/12, A01N 65/24, A01N 65/28, A01N 65/44;**
**A01N 25/30, A01N 65/00, A01N 65/12, A01N 65/24, A01N 65/28, A01N 65/44**

## Description

### Field of the invention

The invention relates to a herbicidal composition comprising at least one essential oil, at least one surfactant and at least one oily substance. The invention also relates to the use of such a herbicidal composition.

### Description of prior art

Among pests, weeds have been documented as serious plant pests which can reduce crop yields and interfere with plant functions to stop their growth. They constantly compete with crops for water and nutrient resources reducing yields and quality and, consequently, causing huge economic losses which can reach 34% in major crops.

Currently, most reliable weed control methods include mechanical weeding, hand weeding and application of chemical herbicides. These last chemical methods pose several problems with their negative impacts on environmental, animal and human health. Also, the systematic application of chemical herbicides increases the weed's resistance to the applied chemical molecules/substances. Moreover, the alternative methods (thermal, mechanical ...) currently proposed are not very effective over time and the lack of persistence of the applied compositions forces the user to restart the operation at short intervals.

The current trend is to find a biological product to minimize the perceived impacts from synthetic herbicides in agriculture production. In this context, essential oils have been identified as potential natural herbicidal active compounds.

An essential oil is a concentrated hydrophobic liquid containing volatile (defined as the tendency of a substance to vaporize) aroma compounds from plants. Essential oils are also known as volatile oils, ethereal oils, aetherolea, or simply as the oil of the plant from which they were extracted. An oil is essential in the sense that it contains the essence of the plant's fragrance, i.e. the characteristic fragrance of the plant from which it is derived. Essential oils are generally extracted by distillation, often by using steam. Other processes include expression, solvent extraction, absolute oil extraction, resin tapping, and cold pressing. According to the norm ISO 9235, an essential oil is a product obtained from a natural raw material of plant origin, by steam distillation, by mechanical processes, for example from the epicarp of fruits, or by dry distillation, after separation of the aqueous phase - if any - by physical processes.

Herbicidal compositions comprising at least one essential oil, at least one oily substance and at least one surfactant are already known and formulated in order to avoid the use of chemical herbicides such as pelargonic acid. In this sense, the document US 2009/099022 discloses a herbicidal composition containing lemongrass essential oil, a carrier oil such as corn oil or linseed oil and a surfactant (for example sodium lauryl sulfate and lecithin).

Document EP2737799 discloses pesticidal lipid particles suspension (e.g. herbicidal) composition containing: 9% (partially) hydrogenated soy oil, 3% cinnamon oil, 3% basil oil, 3.8% SPAN 80, 2.8% TWEEN 20, 1.8% glycerin, 18.8% potassium soap of sunflower acids and 57.8% water, or 10% residual hydrogenated vegetable oil from margarine production, 2% eucalyptus oil, 2% mint oil, 2% coriander oil, 2.8% lauric acid diethanolamide, 2.8% ricin oil ethoxylate (40EO), 2.1% glycerin, 22% potassium soap, 18.6% 2-propanol and 35.7% water.

Document US 2014/023733 discloses an insecticidal concentrate containing: 12.5% alkyl+alkylbenzene sulfonate, 1% coconut diethylamide, 3% tea tree oil, 2% eucalyptus oil, 26.5% ethanol, 5% urea, 50% water. The composition is diluted in water to form an emulsion.

Document US 2008/269177 discloses an insecticidal composition containing: peppermint oil, wintergreen oil, cinnamon leaf oil, canola oil, sesame oil, isopropyl alcohol, lecithin, and water.

Document EP2735229 discloses a hydrophobic composition against varroa mite containing: 15 parts lemongrass (Cymbopogon flexuosus) oil, 15 parts of mint (Mentha piperita) oil, 5 parts of white thyme (Thymus zygis) oil, with at least 45% thymol, 2 parts of modified lecithin (thus not natural), with a hydrophilic - lipophilic balance HLB of 8, and 1 part maltol, and balance being a sunflower oil. The composition is diluted in water to form an emulsion.

Document US 2009/169656 discloses an insect repellent concentrate containing: cinnamon leaf oil 3.70, garlic oil 3.80 %, lemongrass oil 3.80 %, peppermint oil 3.20 %, citronella java (Cymbopogon winterianus) oil 3.10 %, lecithin 7.09 %, soybean oil 36.56 %, apple vinegar (contains citric acid) 38.75 %. The composition is diluted in water to form an emulsion.

Document BR PI0 700941 discloses a herbicidal composition containing: 25 % eucalyptus oil, 25 % citronella oil, 29.3 % ethanol, 20 % glycerin, 0.6 % pepper powder, 0.1 % lactic acid and 0.1 % polysorbat 80 (Tween 80).

Document CN104472570 discloses a fungicidal composition containing: mustard seeds extract 10 parts, eucalyptus oil 20 parts, ethanol 10 parts, carboxymethyl cellulose 10 parts, polysorbat 20 10 parts, soybean oil 15 parts. The composition is diluted in water to form an emulsion.

Document US 2015/051298 discloses antimicrobial emulsions comprising 4 % essential oil (carvacrol), 6 % medium chain triglycerides (MCT) and 2.5, 5, 10, 15 and 20 % of Tween 80. At 2.5 % surfactant concentration the D50 is between 4 and 5 μm.

Terjung et al. (Influence of droplet size on the efficacy of oil-in-water emulsions loaded with phenolic antimicrobials, Food & Function, vol. 3, no. 3, (2012-01-01), pages 290-301) discloses antimicrobial nanoemulsions of 3 % carvacrol essential oil and 7 % Miglyol 12N (medium chain triglycerides) and 2 % Tween 80 with initial D50 = 3 $\mu$m aged for 10 days. D50 increased a little but stayed below 5 $\mu$m.

Document CN101385559 discloses orange flavour emulsions comprising orange essential oil 0.3-0.6 %; vegetable oil 2-5 % and emulsifier 2.3-5.6 %.

Unfortunately, with the actual herbicidal compositions, only poor results are obtained in term of efficiency, notably because the spreading and the adhesion of these compositions are not always sufficient and adequate, because these compositions are often volatile but mainly because the active compound(s) of such herbicidal compositions does/do not necessary penetrate through the epicuticular waxes and through the plant tissues in an effective way.

Thus, nowadays, there is a need to provide an efficient herbicidal composition, comprising at least one essential oil as an active compound, notably to provide an alternative to the chemical herbicides such as pelargonic acid. In parallel, there is a need to provide a herbicidal composition presenting the right and adequate properties in terms of spreading, adhesion and volatility. More particularly, there is a need to provide a herbicidal composition comprising at least one essential oil as an active compound that presents a pre-emergence herbicidal activity or a post-emergence herbicidal activity, preferably that presents simultaneously a pre-emergence herbicidal activity and a post-emergence herbicidal activity. There is also a need to provide a herbicidal composition ensuring that the active compound(s) can penetrate through epicuticular waxes of the weeds leaves in an effective way.

## Summary of the invention

It is an object of the invention to provide a herbicidal composition as an alternative to the chemical herbicides (such as pelargonic acid), comprising at least one essential oil as an active compound, at least one surfactant and at least one oily substance, such a composition presenting the right and adequate properties in terms of spreading, adhesion, volatility and penetration inside the plant tissues through the epicuticular waxes of the weeds leaves, while being at the same time effective both on radical elongation and germination (pre-emergence herbicidal activity) of weeds but also on germinated and developed weeds (post-emergence herbicidal activity).

More particularly, it is an object of the invention to provide a herbicidal composition comprising at least one essential oil as an active compound, this composition remaining stable and "in place" over time once applied for example on weeds in the fields and this composition ensuring an adequate penetration of the active compound(s) inside the plant tissues through the epicuticular waxes of the weeds leaves.

To this end, the invention is about the use of a herbicidal composition comprising at least one essential oil chosen from the group consisting of cinnamon essential oil, citronella essential oil, lemon essential oil, eucalyptus essential oil and mixtures thereof, at least one surfactant, at least one oily substance being a fat fluid/liquid insoluble in water selected from: a vegetable oil or a derivate of a vegetable oil chosen from the group consisting of the fatty esters obtained by esterification or transesterification of vegetable oils, fatty amides obtained by amidification or transamidification of vegetable oils and mixtures thereof, or mixtures thereof, and at least one co-surfactant being a low molecular weight alcohol from methanol to butanol and mixtures thereof, said composition being under the form of an emulsion, for obtaining phytotoxic activity comprising inhibiting seed germination, preventing the resumption of underground or aerial meristem and bud development, or inhibiting the development and growth of the roots, the hypocotyls, the epicotyls, the plantlets or aerial parts of the plant.

The terms "active compound" mean that the compound is biologically active as a herbicide (herbicidal activity). The desired herbicidal activity may be the sort to inhibit seed germination, to prevent the resumption of underground or aerial meristem and bud development, or to inhibit the development and growth of the roots and also of the hypocotyls, the epicotyls and any aerial parts of the plants.

The terms "oily substance" designate a fat fluid/liquid insoluble in water, from plant, animal or mineral origin.

The term "emulsion" means a fine dispersion of minute droplets of one liquid in another in which it is not soluble or miscible.

The invention is defined by the independent claims. The dependent claims define advantageous embodiments.

In the context of the present invention, it was surprisingly determined that the use of a herbicidal composition comprising at least one essential oil chosen from the group consisting of cinnamon essential oil, citronella essential oil, lemon essential oil, eucalyptus essential oil and mixtures thereof, at least one surfactant, at least one oily substance being a vegetable oil or a derivate of a vegetable oil chosen from the group consisting of the fatty esters obtained by esterification or transesterification of vegetable oils, fatty amides obtained by amidification or transamidification of vegetable oils and mixtures thereof, or mixtures thereof, and at least one co-surfactant being a low molecular weight alcohol from methanol to butanol and mixtures thereof, said composition being under the form of an emulsion,, demonstrates an efficient herbicidal activity on weeds. Indeed, it was shown that such a use according to the invention exhibits both a pre-emergence herbicidal activity and a post-emergence herbicidal activity while being stable and remaining in place over time once applied.

It was also shown that the presence of at least one oily substance in a composition used according to the present invention confers the right and adequate properties in terms of spreading, adhesion and volatility to the composition. In other words, the presence of at least one oily substance in a herbicidal composition used according to the present invention, was determined to improve the spreading and the adhesion of the composition on the target sites, for example on the leaves of weeds, while reducing the volatility of the composition. The reduction of the volatility of the composition allows to ensure that it remains on the target sites, for example on the leaves of weeds. It was also shown that the presence of an oily substance in a herbicidal composition used according to the present invention enhances at least its pre- and postemergence activities on weeds. Finally, it was also shown that the penetration of the active compounds through the epicuticular waxes of the weeds leaves is enhanced.

Advantageously, the composition used according to the present invention, under the form of an emulsion, presents droplets having a droplet size inferior to 15 $\mu$m, preferably a droplet size inferior to 10 $\mu$m, more preferably a droplet size comprised between 0.1 $\mu$m and 10 $\mu$m, more preferably a droplet size comprised between 0.5 $\mu$m and 5 $\mu$m, more preferably a droplet size comprised between 3 $\mu$m and 4 $\mu$m. According to the present invention, the composition used under the form of an emulsion may also present droplets having a droplet size inferior to 0.1 $\mu$m, preferably a droplet size inferior to 0.01 $\mu$m.

In particular and preferably, the composition used according to the present invention, under the form of an emulsion, presents droplets having a droplet size distribution D90 equal to 15 $\mu$m, more preferably a droplet size distribution D90 equal to 10 $\mu$m.

In particular and preferably, the composition used according to the present invention, under the form of an emulsion, presents droplets having a droplet size distribution D50 equal to 5 $\mu$m, more preferably a droplet size distribution D50 equal to 4.5 $\mu$m.

In particular and preferably, the composition used according to the present invention, under the form of an emulsion, presents droplets having a droplet size distribution D10 equal to 2 $\mu$m, more preferably a droplet size distribution D50 equal to 1.5 $\mu$m.

In the context of the present invention, it was determined that such a use of a composition under the form of an emulsion presenting droplets having a droplet size inferior to 15 $\mu$m, preferably a droplet size inferior to 10 $\mu$m, more preferably a droplet size comprised between 0.1 $\mu$m and 10 $\mu$m, more preferably a droplet size comprised between 0.5 $\mu$m and 5 $\mu$m, more preferably a droplet size comprised between 3 $\mu$m and 4 $\mu$m, improves the penetration of the active molecules (compounds) through the epicuticular waxes of the weeds leaves, so improving the herbicidal activity of essential oils.

In the context of the present invention, it was determined that such a use of a composition under the form of an emulsion presenting droplets having such D90 and/or D50 and/or D10 value(s), improves the penetration of the active molecules (compounds) through epicuticular waxes of the weeds leaves, so improving the herbicidal activity of essential oils.

It was also determined that the use of a composition under the form of an emulsion presenting such droplet sizes allows to avoid the formation of a precipitate by decantation what significantly increases the stability of the composition over time. Also, with such droplet sizes in a composition used according to the present invention, under the form of an emulsion, it was shown that these droplets retain their size after one unique mixing. That is to say that, when applying the composition on a crop field, the composition does not need to be continuously mixed.

In a herbicidal composition used according to the invention, said at least one oily substance is a vegetable oil or a derivate of a vegetable oil chosen from the group consisting of the fatty esters obtained by esterification or transesterification of vegetable oils, fatty amides obtained by amidification or transamidification of vegetable oils and mixtures thereof, or mixtures thereof.

In general, by (trans)esterification and (trans)amidification is meant reactions which take place on the terminal function of the constituent triglycerides of the vegetable oil, and by epoxidation is meant a reaction taking place on the unsaturations of the vegetable oil.

Advantageously, in a herbicidal composition used according to the invention, said vegetable oil is chosen from the group consisting of hazelnut oil, rapeseed oil, soybean oil, sunflower oil, pistachio oil, olive oil, almond oil, sweet almond oil, peanut oil, canola oil, safflower oil, cottonseed oil, linseed oil, corn oil, grape-seed oil, sesame oil and mixtures thereof. This list is not exhaustive.

In a herbicidal composition used according to the invention, said at least one essential oil is chosen from the group consisting of cinnamon essential oil, citronella essential oil, lemon essential oil, eucalyptus essential oil and mixtures thereof.

Cinnamon essential oil essentially contains the following molecules: cinnamaldehyde, cinnamyl acetate and benzaldehyde, eugenol, eugenyl acetate, caryophyllene, linalool and phellandrene. This list is not exhaustive.

Citronella essential oil essentially contains the following: molecules: citronellal, geraniol, citronellol, citral and limonene. This list is not exhaustive.

Eucalyptus essential oil essentially contains the following: eucalyptol, isopulegol, pinene ($\alpha$ et $\beta$) and p-cymene. This list is not exhaustive.

Preferably, in a herbicidal composition used according to the invention, said cinnamon essential oil is obtained from the plant Cinnamomun zeylanicum or from the plant Cinnamomun cassia or from the plant Cinnamomun talama or from the plant Cinnamomun aromaticum or from the plant Cinnamomun glaucescens or from the plant Cinnamomun camphora. This list is not exhaustive.

Preferably, in a herbicidal composition used according to the invention, said citronella essential oil is obtained from the plant Cymbopogon winterianus or from the plant Cymbopogon flexuosus.

Advantageously, in a herbicidal composition used according to the invention, said eucalyptus essential oil is obtained from the plant Eucalyptus citriodora or from the plant Eucalyptus globulus or from the plant Eucalyptus radiata.

According to the invention, said at least one essential oil can be from synthetic origin or from natural origin, for example from an extract or from a fraction of an extract from the roots, the barks, the leaves, the stems, the fruits, the seeds and/or the flowers.

The extract used in the context of the invention to obtain an essential oil can be a cellular extract or an extracellular extract of the plant, which can be prepared according to any method known to those skilled in the art for extracting essential oils from plant tissues. The extract can be obtained from the roots, the barks, the leaves, the stems, the fruits, the seeds and/or the flowers.

Advantageously, the extract is derived from the leaves, the barks, the fruits or the seeds, the use of which does not lead to the death of the plant from which they are extracted.

The extract obtained can then be concentrated, or dried, for example by evaporation or lyophilization. The extract obtained can be incorporated as it is into the composition or else be purified, treated or fractionated, so as to enrich for desired active ingredient.

Advantageously, in a herbicidal composition used according to the invention, said at least one surfactant is a natural surfactant chosen from the group consisting of lecithin, casein, saponines and mixtures thereof.

Alternatively, in a herbicidal composition used according to the invention, said at least one surfactant is a synthetic surfactant chosen from the group consisting of sorbitan monododecanoate poly(oxy-1,2-ethanediyl), alkyl polyglucosides, sorbitan laurate, polyoxyethylene (20) sorbitan monolaurate, polyoxyethylene (20) sorbitan monopalmitate, polyoxyethylene (20) sorbitan monostearate, polyoxyethylene (20) sorbitan monooleate, polyoxyethylene glycol sorbitan laurate, hexaethylene glycol sorbitan monooleate, polyoxyethylene sorbitan stearate, decaglyceryl monooleate, decaglyceryl dioleate, polyoxyethylene sorbitan tristearate, monodehydrosorbitol monooleate, sorbitan monolaurate, sorbitan monopalmitate, sorbitan laurate and mixtures thereof. It is understood that any other appropriate surfactant is part of the present invention. This list is not exhaustive.

Commercial names of adequate non-ionic surfactants are for example: Tween 20®, Tween 80®, Span 80®, Atplus® UEP-100, ethoxylated castor oil, Span 85®, Brij® 93, Brij® S 100, IGEPAL® CA-210, IGEPAL® CO-890, MERPOL® HCS, SP Brij® C2 MBAL-SO-(SG), Triton ™ x-405 reduced, Etocas® 5, glycerol monostearate, glyceryl stearate, Emulson® CO 9, Span 20® et Span 80® and mixtures thereof. This list is not exhaustive.

The presence of at least one surfactant in a herbicidal composition used according to the invention, allows to obtain (1) a stable emulsion showing a good interaction between the hydrophilic and hydrophobic parts of the vegetable oil and the essential oil, (2) small particle size to improve the penetration of active molecules through epicuticular waxes of the weeds leaves and (3) an improvement on herbicidal activity of essential oils.

Preferably, in a herbicidal composition used according to the invention, said at least one surfactant presents a hydrophilic-lipophilic balance (HLB) value comprised between 5 and 10, preferably a HLB value comprised between 7 and 9, more preferably a HLB value equal to 8.

Such a HLB value of said at least one surfactant comprised between 5 and 10, preferably comprised between 6 and 8 and more preferably equal to 7 was determined, in the context of the present invention, to be the adequate HLB value in order to obtain a composition under the form of an emulsion with the right droplet size allowing the composition to effectively penetrate the plant membranes, notably epicuticular waxes of the weeds leaves. As stated above, preferably, according to the present invention, the composition under the form of an emulsion presents droplets having a droplet size inferior to 15 $\mu$m, preferably a droplet size inferior to 10 $\mu$m, more preferably a droplet size comprised between 0.1 $\mu$m and 10 $\mu$m, more preferably a droplet size comprised between 0.5 $\mu$m and 5 $\mu$m, more preferably a droplet size comprised between 3 $\mu$m and 4 $\mu$m. According to the present invention, the composition under the form of an emulsion may also present droplets having a droplet size inferior to 0.1 $\mu$m, preferably a droplet size inferior to 0.01 $\mu$m.

It was also shown that the compositions used according to the invention presenting such a HLB value were more effective in term of pre-emergence and post-emergence herbicidal activity. Also, it was determined that such a HLB value allows to obtain stable composition without the formations of precipitates or supernatants.

Within the meaning of the present invention, the term "HLB" is understood as being an empirical expression which expresses the hydrophilic and hydrophobic (or lipophilic) relationship of a surfactant. The hydrophilic-hydrophobic balance (HLB) of a surfactant expresses its properties: a surfactant has a greater affinity for water if the HLB balance is high (hydrophilic nature) and, conversely, a surfactant has a lower affinity for water (lipophilic or hydrophobic nature) when its HLB value is low.

The determination of the HLB value by calculation allows an arbitrary scale to be defined. The calculation method can be as follows: HLB=20×Mh/M. This empirical formula allowing the HLB value to be calculated comprises the ratio between the molecular mass of the hydrophilic group of the surfactant in question (Mh) multiplied by 20 and the molecular mass of the surfactant in question (M).

Starting from this empirical formula, an arbitrary scale is therefore defined and has HLB values comprised between 0 and 20. An HLB value of zero corresponds to a completely lipophilic surfactant, and an HLB value of 20 corresponds to a completely hydrophilic surfactant. A distinction is made, therefore, between surfactants of low, medium and high HLB: a surfactant of low HLB has an HLB value of from 0 to 6; a surfactant of medium HLB has an HLB value of from 6 to 14 and a surfactant of high HLB has an HLB value of from 14 to 20.

Finally, the HLB value of a surfactant allows the solubility of the surfactant in water or in oil to be indicated and therefore the direction of the emulsion (water-in-oil or oil-in-water) to be determined. For this reason, a surfactant of high HLB will have a greater affinity for water and will therefore be more soluble in water than in oil and vice versa for surfactants of low HLB, which will be more soluble in oil. A surfactant that is more soluble in water than in oil will influence the direction of the "oil-in-water" emulsion and vice versa for a surfactant that is more soluble in oil than in water.

In the sense of the present invention, said at least one surfactant can be a mixture of surfactants. For example, such a mixture of surfactants can be a mixture of a low HLB surfactant with a high HLB surfactant. As an example, a mixture of surfactants can be a mixture of a first surfactant having a HLB value comprised between 3 and 6 so allowing to disperse an aqueous phase in a lipophilic phase with a second surfactant having a HLB value comprised between 15 and 18 so allowing to disperse a lipophilic phase in an aqueous phase.

In the case of a binary mixture of surfactants, the HLB value of this mixture can be calculated as followed:

$$\text{binary mixture HBL} = [m1 / (m1 + m2) \cdot HLB1] + [m2 / (m1 + m2) \cdot HLB2]$$

where m1 = mass of the first surfactant

m2 = mass of the second surfactant
HLB1 = HLB of the first surfactant
HLB2 = HLB of the second surfactant

According to the invention, like for compositions only comprising one surfactant having a HLB value comprised between 5 and 10, the binary mixture HLB value is preferably comprised between 5 and 10, more preferably equal to 7. It is understood, that, according to the present invention, the composition may comprise more than two surfactants, for example mixtures of 3 or 4 surfactants.

Preferably, a herbicidal composition used according to the invention further comprises an antioxidant agent chosen from the group consisting of tocopherol, ascorbic acid, sodium ascorbate, calcium ascorbate, citric acid and mixtures thereof. This list is not exhaustive.

Advantageously, in a herbicidal composition used according to the invention, said at least one essential oil as an active compound is present in the composition in a proportion ranging from 1% to 20% by weight relative to the total weight of the composition, preferably ranging from 2% to 5% by weight relative to the total weight of the composition.

Preferably, in a herbicidal composition used according to the invention, said at least one surfactant is present in the composition in a proportion ranging from 0.1% to 20% by weight relative to the total weight of the composition, preferably ranging from 0.5% to 5% by weight relative to the total weight of the composition.

Advantageously, in a herbicidal composition used according to the invention, said at least one oily substance is present in the composition in a proportion ranging from 1% to 20% by weight relative to the total weight of the composition, preferably ranging from 2% to 5% by weight relative to the total weight of the composition.

Preferably, the herbicidal composition used according to the invention further comprises at least one solvent chosen from the group consisting of water, alcohols, ketones, esters, ethers, polyols, ethyl acetate, propylene carbonate, acetonitrile and mixtures thereof.

The herbicidal composition used according to the invention further comprises at least one co-surfactant being a low molecular weight alcohol from methanol to butanol and mixtures thereof.

Advantageously, in a herbicidal composition used according to the invention, said at least one co-surfactant is present in the composition in a proportion ranging from 0.01% to 10% by weight relative to the total weight of the composition, preferably ranging from 0.1% to 5% by weight relative to the total weight of the composition, more preferably ranging from 0.5% to 2% by weight relative to the total weight of the composition.

Preferably, the herbicidal composition used according to the invention, further comprises at least one adjuvant chosen from the group consisting of paraffin wax, Trend® 90, Heliosol ®, 1-octyl-2-pyrrolidone, Actirob® B, Atplus® 463, Actilandes ™, Vegelux®, Emulsol® and mixtures thereof.

Preferably, the herbicidal composition used according to the invention, is under the form of capsulates, in particular under the form of nano- or micro-capsulates, liquids or concentrates. Any type of known herbicidal composition may be prepared.

Advantageously, in a herbicidal composition used according to the invention, all components are bio-based components.

The present invention relates to the use of a composition according to the invention for obtaining phytotoxic activity comprising inhibiting seed germination, preventing the resumption of underground or aerial meristem and bud development, or inhibiting the development and growth of the roots, the hypocotyls, the epicotyls, the plantlets or aerial parts of the plant. In particular, use may be made of herbicidal compositions in the form of granules, liquids, emulsions or emulsifiable concentrates, as adjuvants for herbicidal mixture.

**Short description of the drawings**

These and further aspects of the invention will be explained in greater detail by way of examples and with reference to the accompanying figures in which:

Fig.1    shows the remaining quantity (% weight) on a support over time of a composition according to the invention comprising an oily substance (with FS) in comparison with a composition not comprising an oily substance (without FS);

Fig.2    shows the germination rate (%) of different seeds (carrot, chamomile, clover and plantain) treated with two different compositions according to the invention (HE1 and HE2);

Fig.3    shows the toxicity score measured on Bryophyte seven days after treatment with two different compositions according to the invention (HE1 and HE2);

Fig.4    shows the toxicity score measured on Pterydophyte (Equisetum arvense) seven days after treatment with two different compositions according to the invention (HE1 and HE2);

Fig.5    shows the lost percentage (%) measured on crimson clover 7 days after treatment with different compositions according to the invention;

Fig.6    shows the lost percentage (%) measured on crimson clover 7 days after treatment with different compositions according to the invention;

Fig.7    shows the lost percentage (%) measured on grass 7 days after treatment with different compositions according to the invention;

Fig.8    shows the lost percentage (%) measured on crimson clover 7 days after treatment with different compositions according to the invention;

Fig.9    shows the lost percentage (%) measured on grass 7 days after treatment with different compositions according to the invention.

**Detailed description of embodiments of the invention**

**Volatility of a composition according to the invention**

In order to determine the volatility of a composition according to the invention comprising an oily substance, in comparison with a composition not containing an oily substance, the weight of 10 drops of each composition was measured every 5 minutes. In practice, 10 drops of 10 $\mu$L were put on a small piece of parafilm paper (5x5 cm). The volatility test was performed under a temperature of 20 $\pm$ 2°C.

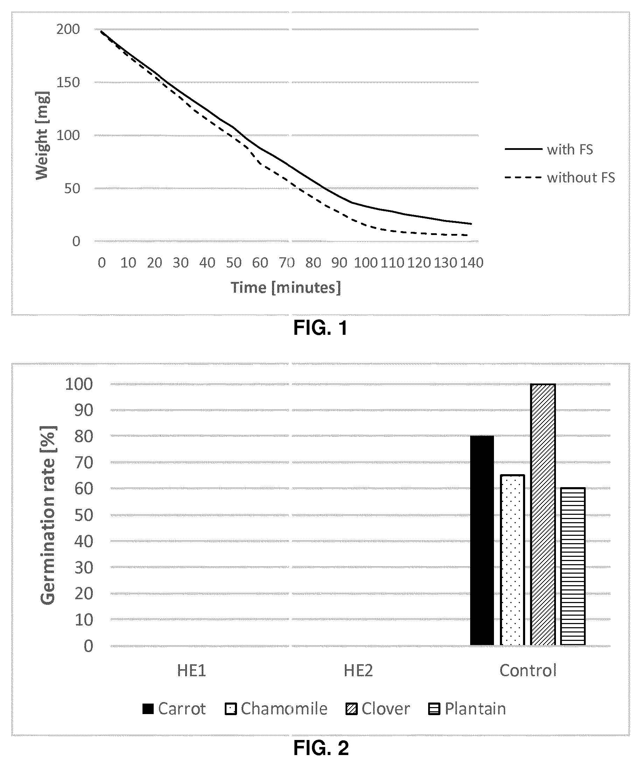

Figure 1 shows the obtained results with two different compositions (see Table 1), i.e. the remaining quantity (% weight) over time of a composition according to the invention comprising an oily substance (with FS) in comparison with a composition not comprising an oily substance (without FS) and not being part of the present invention.

Table 1 - compositions with and without an oily substance (% w:w)

|  | Essential oil (1) | Oily substance (2) | Surfactant (3) | Co-surfactant (4) | Water |  |
|---|---|---|---|---|---|---|
| With FS | 3% | 3% | 2% | 0.5% | 91.5% | n=3 |

(continued)

|  | Essential oil (1) | Oily substance (2) | Surfactant (3) | Co-surfactant (4) | Water | |
|---|---|---|---|---|---|---|
| Without FS | 3% | 0% | 2% | 0.5% | 94.5% | n=3 |
| (1) Cinnamomum cassia (from bark) (Pranarom)<br>(2) grape oil (Emile Noël)<br>(3) Tween 20® (Sigma Aldrich)<br>(4) ethanol 99.5% (Sigma Aldrich) | | | | | | |

As it can be seen on Figure 1, a composition according to the invention comprising an oily substance preserves the integrity of the composition once applied by decreasing its volatility. Indeed, higher weights were measured over time for the composition according to the invention (with FS) in comparison with a composition not comprising an oily substance (without FS). Concretely, this means that a composition according to the invention presents a longer duration of action.

**Biological tests**

**1. Pre-emergence activity**

The pre-emergence activity of compositions according to the invention was evaluated on different seeds: carrot (Daucus carota), chamomile (Chamaemelum nobile), crimson clover (Trifolium incarnatum) and plantain (Plantago lanceolata).

Filter papers in petri dishes were moistened with two different compositions according to the invention (HE1 and HE2 - see Table 2) while other filter papers were moistened with water (control), before placing seeds in contact with these filter papers.

Table 2 - compositions according to the invention (% w:w)

|  | Essential oil | Oily substance (3) | Surfactant (4) | Co-surfactant (5) | Water | |
|---|---|---|---|---|---|---|
| HE1 (1) | 0.75% | 0.75% | 2% | 0.5% | 96% | n=5 |
| HE2 (2) | 0.75% | 0.75% | 2% | 0.5% | 96% | n=5 |
| (1) HE1 = Cinnamomum cassia (from bark) (Pranarom)<br>(2) HE2 = Cinnamomum zeylanicum (from leaves) (Pranarom)<br>(3) grape oil (Emile Noël)<br>(4) Tween 20® (Sigma Aldrich)<br>(5) ethanol 99.5% (Sigma Aldrich) | | | | | | |

A first evaluation of the seeds germination rate on the filter paper was performed 8 days after the placement of the petri dishes in a growth chamber at a constant temperature of 23°C. The ungerminated seeds after 7 days were transposed on water agar in petri dishes placed in a growth chamber at a constant temperature of 23°C and a second assessment was performed 20 days later to complete the evaluation of the germination rate. A seed is considered germinated when the radicle pierces the integuments.

The obtained results are presented in Figure 2. As it can be seen, both the compositions according to the invention HE1 (Cinnamomum cassia) and HE2 (Cinnamomum zeylanicum) totally inhibit the germination of the tested seeds: compositions according to the invention presents a pre-emergence activity.

**2. Post-emergence activity**

Essay 1: post-emergence activity on Bryophyte

In order to assess the post-emergence activity of compositions according to the invention on Bryophyte (adult stage), different compositions according to the invention (HE1 and HE2 - see Table 3) were tested by spraying (100 ml/m$^2$) on Bryophytes (adult stage). Pelargonic acid at a concentration of 30 g/L (PA) (Compo®) was used as a positive control and a composition not being part of the present invention without the active substance (essential oil) (SSA) was also tested.

Table 3 - compositions tested on Bryophyte (% w:w)

|  | Essential oil | Oily substance (3) | Surfactant (4) | Co-surfactant (5) | Water |  |
|---|---|---|---|---|---|---|
| HE1 (1) | 3.4% | 3.4% | 2% | 0.5% | 90.7% | n=5 |
| HE2 (2) | 3.4% | 3.4% | 2% | 0.5% | 90.7% | n=5 |
| SSA | 0% | 3.4% | 2% | 0.5% | 94.1% | n=5 |
| (1) HE1 = Cinnamomum cassia (from bark) (Pranarom) <br> (2) HE2 = Cinnamomum zeylanicum (from leaves) (Pranarom) <br> (3) grape oil (Emile Noël) <br> (4) Tween 20® (Sigma Aldrich) <br> (5) ethanol 99.5% (Sigma Aldrich) | | | | | | |

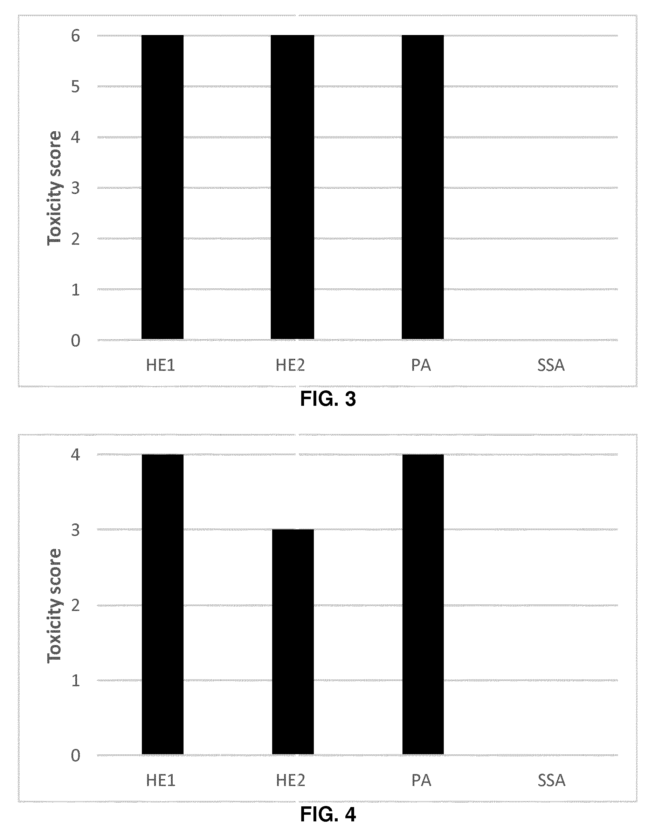

The obtained results (toxicity score) are presented in Figure 3. For Bryophytes, it is recognized that the score of 0 represents a healthy and undamaged plant while a score of 6 represents a dead plant. These scores were determined 7 days after treatment with the different compositions.

As it can be seen, both the compositions according to the invention HE1 (Cinnamomum cassia) and HE2 (Cinnamomum zeylanicum) resulted in a toxicity score of 6 equivalent to the score noted with the positive control (pelargonic acid): compositions according to the invention presents a post-emergence activity on Bryophyte.

Essay 2: post-emergence activity on Pterydophyte

In order to assess the post-emergence activity of compositions according to the invention on Pterydophyte, the Pterydophyte Equisetum arvense (adult stage) was considered. Different compositions according to the invention (HE1 and HE2 - see Table 4) were tested by spraying (100 ml/m$^2$). Pelargonic acid at a concentration of 30 g/L (PA) (Compo®) was used as a positive control and a composition not being part of the present invention without the active substance (essential oil) (SSA) was also tested.

Table 4 - compositions tested on Pterydophyte (% w:w)

|  | Essential oil | Oily substance (3) | Surfactant (4) | Co-surfactant (5) | Water |  |
|---|---|---|---|---|---|---|
| HE1 (1) | 3.4% | 3.4% | 2% | 0.5% | 90.7% | n=10 |
| HE2 (2) | 3.4% | 3.4% | 2% | 0.5% | 90.7% | n=10 |
| SSA | 0% | 3.4% | 2% | 0.5% | 94.1% | n=10 |
| (1) HE1 = Cinnamomum cassia (from bark) (Pranarom) <br> (2) HE2 = Cinnamomum zeylanicum (from leaves) (Pranarom) <br> (3) grape oil (Emile Noël) <br> (4) Tween 20® (Sigma Aldrich) <br> (5) ethanol 99.5% (Sigma Aldrich) | | | | | | |

The obtained results (toxicity score) are presented in Figure 4. For Pterydophytes, it is recognized that the score of 4 represents a dead plant. These scores were determined 7 days after treatment with the different compositions.

As it can be seen, the compositions according to the invention HE1 (Cinnamomum cassia) and HE2 (Cinnamomum zeylanicum) respectively resulted in a toxicity score of 4 and 3 equivalent to the score noted with the positive control (pelargonic acid): compositions according to the invention presents a post-emergence activity on Pterydophyte.

Essay 3: post-emergence activity on crimson clover

The post-emergence activity of compositions according to the invention was evaluated on crimson clover (Trifolium incarnatum) (2-3 leaves stage). By spraying (100 ml/m$^2$), different compositions according to the invention were tested (see Table 5). Pelargonic acid at a concentration of 30 g/L (PA) (Compo®) was used as a positive control and compositions not being part of the present invention without the active substance (essential oil) (SSA) were also tested. Water was used as a negative control. After treatment with the different compositions, plants were maintained under the following conditions: temperature of 27 ± 3°C and RH (Relative Humidity) of 60 ± 5% and the post-emergence activity was evaluated 7 days after the treatment with the different compositions.

Table 5 - compositions tested on crimson clover (% w:w)

| | Essential oil | Oily substance | Surfactant (1) | Co-surfactant (2) | Water | |
|---|---|---|---|---|---|---|
| HE1, Ra | 3% | Ra 3% | 2% | 0.5% | 91.5% | n=3 |
| HE2, Ra | 3% | Ra 3% | 2% | 0.5% | 91.5% | n=3 |
| HE3, Ra | 3% | Ra 3% | 2% | 0.5% | 91.5% | n=3 |
| SSA, Ra | 0% | Ra 3% | 2% | 0.5% | 94.5% | n=3 |
| HE1, No | 3% | No 3% | 2% | 0.5% | 91.5% | n=3 |
| SSA, No | 0% | No 3% | 2% | 0.5% | 94.5% | n=3 |
| HE1, Li | 3% | Li 3% | 2% | 0.5% | 91.5% | n=3 |
| SSA, Li | 0% | Li 3% | 2% | 0.5% | 94.5% | n=3 |

HE1 = Cinnamomum cassia (from bark) (Floressence)
HE2 = Cinnamomum zeylanicum (from leaves) (Floressence)
HE3 = Cymbopogon wintrerianus (Floressence)
Ra = grape oil; No = hazelnut oil ; Li = linseed oil (Emile Noël)
(1) Tween 20® (Sigma Aldrich)
(2) ethanol 99.5% (Sigma Aldrich)

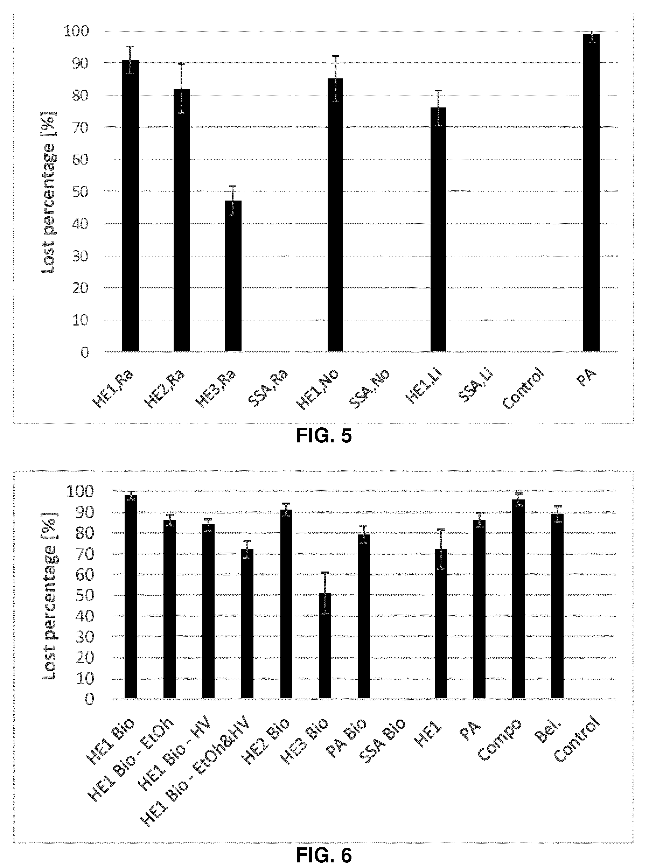

The obtained results are presented in Figure 5. As it can be seen, the compositions HE1, RA; HE2, RA; HE1, No and HE1, Li all presented a high post-emergence activity. In particular, the obtained results allowed to highlight the fact that different oils (RA, No and Li) can be used since similar lost percentages were noted for the essential oil HE1 when mixed with these different oil (oily substance). The presented results also demonstrated that the active substance, i.e. the essential oil, is essential for the post-emergence activity since the tests without essential oil (SSA) led to 0% lost percentage.

Essay 4: post-emergence activity on crimson clover

The post-emergence activity of compositions according to the invention was evaluated on crimson clover (Trifolium incarnatum) (2-3 leaves stage). By spraying (100 ml/m$^2$), different compositions according to the invention were tested (see Table 6) were tested. Pelargonic acid at a concentration of 30 g/L (PA) (Belchim Crop Protection) was used as a positive control as well as two other positive controls (Beloukha® and Compo®) and compositions not being part of the present invention without the active substance (essential oil) (SSA) was also tested. Water was use as a negative control. After treatment with the different compositions, plants were maintained under the following conditions: temperature of 27 ± 3°C and RH (Relative Humidity) of 60 ± 5% and the post-emergence activity was evaluated 7 days after the treatment with the different compositions.

Table 6 - compositions tested on crimson clover (% w:w)

| | Essential oil | Oily substance (1) | Surfactant | Co-surfactant (4) | Water | |
|---|---|---|---|---|---|---|
| HE1 Bio | 3% | 3% | 2% (2) | 0.5% | 91.5% | n=4 |
| HE1 Bio-EtOh | 3% | 3% | 2% (2) | 0% | 92% | n=4 |
| HE1 Bio-HV | 3% | 0% | 2% (2) | 0.5% | 94.5% | n=4 |
| HE1 Bio-EtOh&HV | 3% | 0% | 2% (2) | 0% | 95% | n=4 |
| HE2 Bio | 3% | 3% | 2% (2) | 0.5% | 91.5% | n=4 |
| HE3 Bio | 3% | 3% | 2% (2) | 0.5% | 91.5% | n=4 |
| SSA Bio | 0% | 3% | 2% (2) | 0.5% | 94.5% | n=4 |

(continued)

| | Essential oil | Oily substance (1) | Surfactant | Co-surfactant (4) | Water | |
|---|---|---|---|---|---|---|
| HE1 | 3% | 3% | 2% (3) | 0.5% | 91.5% | n=4 |

| HE1 = Cinnamomum cassia (from bark) (Floressence) |
| HE2 = Cinnamomum zeylanicum (from leaves) (Floressence) |
| HE3 = Cymbopogon wintrerianus (Floressence) |
| (1) = grape oil (Emile Noël) |
| (2) Soy lecithin (MP Biomedicals) |
| (3) Tween 20® (Sigma Aldrich) |
| (4) ethanol 99.5% (Sigma Aldrich) |

Compositions HE1 Bio-EtOh, HE1 Bio-HV and HE1 Bio-EtOh&HV are not part of the present invention.

The obtained results are presented in Figure 6. As it can be seen, all the compositions according to the present invention were effective with at least 50% lost percentage and most of these compositions allowed to reach lost percentages equivalent to those observed with the positive controls (PA, Compo, Bel.).

It is important to note the presence of an oily substance (i.e., a vegetable oil) increased the post-emergence activity of a composition according to the present invention. Indeed, when comparing the results obtained for HE1 Bio-EtOh (essential oil + oily substance + surfactant) to the results obtained for HE1 Bio-EtOh&HV (essential oil + surfactant), it can be concluded that the oily substance enhances the post-emergence activity since the lost percentage is significantly increased with the composition Bio-EtOh (essential oil + oily substance + surfactant).

Another point is that the use of a natural surfactant (from natural origin) or of a synthetic surfactant gave different results: the use of soy lecithin as natural surfactant (HE1 Bio) instead of Tween 20® (HE1) allowed to observe a significant higher lost percentage.

Essay 5: post-emergence activity on grass

The post-emergence activity of compositions according to the invention was evaluated on grass (adult stage). By spraying (100 ml/m$^2$), different compositions according to the invention were tested (see Table 7). Compo® at a concentration of 30 g/L (Compo) was used as a positive control and a composition not being part of the present invention without the active substance (essential oil) (SSA) was also tested. Water was used as a negative control. After treatment with the different compositions, plants were maintained under the following conditions: temperature of $27 \pm 3$°C and RH (Relative Humidity) of $60 \pm 5$% and the post-emergence activity was evaluated 7 days after the treatment with the different compositions.

Table 7 - compositions tested on grass (% w:w)

| | Essential oil | Oily substance (1) | Surfactant | Co-surfactant (4) | Water | |
|---|---|---|---|---|---|---|
| HE1 Bio | 3% | 3% | 2% (2) | 0.5% | 91.5% | n=4 |
| HE1 Bio-EtOh | 3% | 3% | 2% (2) | 0% | 92% | n=4 |
| HE1 Bio-HV | 3% | 0% | 2% (2) | 0.5% | 94.5% | n=4 |
| HE1 Bio-EtOh&HV | 3% | 0% | 2% (2) | 0% | 95% | n=4 |
| HE2 Bio | 3% | 3% | 2% (2) | 0.5% | 91.5% | n=4 |
| HE3 Bio | 3% | 3% | 2% (2) | 0.5% | 91.5% | n=4 |
| SSA Bio | 0% | 3% | 2% (2) | 0.5% | 94.5% | n=4 |
| HE1 | 3% | 3% | 2% (3) | 0.5% | 91.5% | n=4 |

| HE1 = Cinnamomum cassia (from bark) (Floressence) |
| HE2 = Cinnamomum zeylanicum (from leaves) (Floressence) |
| HE3 = Cymbopogon wintrerianus (Floressence) |
| (1) = grape oil (Emile Noel) |
| (2) Soy lecithin (MP Biomedicals) |
| (3) Tween 20® (Sigma Aldrich) |
| (4) ethanol 99.5% (Sigma Aldrich) |

Compositions HE1 Bio-EtOh, HE1 Bio-HV and HE1 Bio-EtOh&HV are not part of the present invention.

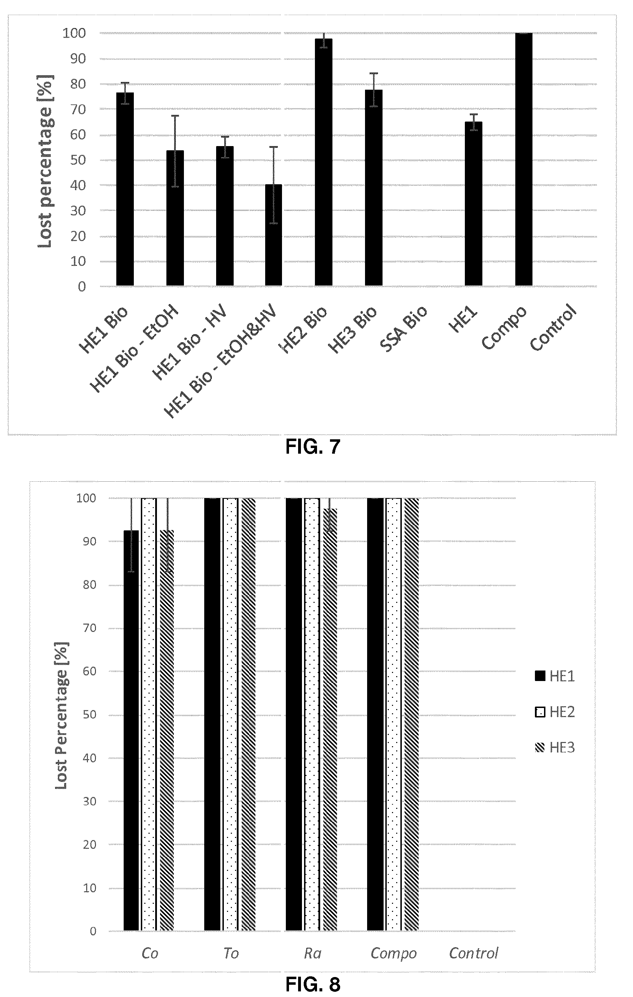

The obtained results are presented in Figure 7. As it can be seen, all the compositions according to the present invention were effective with at least 40% lost percentage.

It is important to note the presence of an oily substance (i.e., a vegetable oil) increased the post-emergence activity of a composition according to the present invention. Indeed, when comparing the results obtained for HE1 Bio-EtOh (essential oil + oily substance + surfactant) to the results obtained for HE1 Bio-EtOh&HV (essential oil + surfactant), it can be concluded that the oily substance enhances the post-emergence activity since the lost percentage is significantly increased with the composition Bio-EtOh (essential oil + oily substance + surfactant).

Another point is that the use of a natural surfactant (from natural origin) or of a synthetic surfactant gave different results: the use of soy lecithin as natural surfactant (HE1 Bio) instead of Tween 20® (HE1) allowed to observe a significant higher lost percentage.

Essay 6: post-emergence activity on crimson clover

The post-emergence activity of compositions according to the invention was evaluated on crimson clover (Trifolium incarnatum) (2-3 leaves stage). The objective of this Essay 6 was to test different vegetable oil (oily substance): rapeseed oil - Co (Everyday®); sunflower oil - To (Everyday®) and grape-seed oil - Ra (Emile Noël) in combination with three different essential oils: Cinnamomum cassia - HE1 (from bark - Floressence), Cinnamomum zeylanicum - HE2 (from leaves - Floressence) and Cymbopogon wintrerianus - HE3 (Floressence). By spraying (100 ml/m$^2$), different compositions according to the invention were tested. Each formulation was prepared as follow: 3% of the tested essential oil (HE1 or HE2 or HE3) + 3% of the tested oily substance (Co, or Ra or To) + 2% Soy lecithin (MP Biomedicals) as a surfactant + 0.5% ethanol 99.5% (Sigma Aldrich) as a co-surfactant + 91.5% water. Compo® at a concentration of 30 g/L (Compo) was used as a positive control. Water was use as a negative control. After treatment with the different compositions, plants were maintained under the following conditions: temperature of 27 ± 3°C and RH (Relative Humidity) of 60 ± 5% and the post-emergence activity was evaluated 7 days after the treatment with the different compositions.

The obtained results are presented in Figure 8. As it can be seen, all the compositions according to the present invention were effective and allowed to reach lost percentages equivalent to those observed with the positive control. These results also show that different oily substances can be used with different essential oils in an effective way.

Essay 7: post-emergence activity on grass

The post-emergence activity of compositions according to the invention was evaluated on grass (adult stage). The objective of this Essay 7 was to test different vegetable oil (oily substance): rapeseed oil - Co (Everyday®); sunflower oil - To (Everyday®) and grape-seed oil - Ra (Emile Noël) in combination with three different essential oils: Cinnamomum cassia - HE1 (from bark - Floressence), Cinnamomum zeylanicum - HE2 (from leaves - Floressence) and Cymbopogon wintrerianus - HE3 (Floressence). By spraying (100 ml/m$^2$), different compositions according to the invention were tested. Each formulation was prepared as follow: 3% of the tested essential oil (HE1 or HE2 or HE3) + 3% of the tested oily substance (Co, or Ra or To) + 2% Soy lecithin (MP Biomedicals) as a surfactant + 0.5% ethanol 99.5% (Sigma Aldrich) as a co-surfactant + 91.5% water. Compo® at a concentration of 30 g/L (Compo) was used as a positive control. Water was use as a negative control. After treatment with the different compositions, plants were maintained under the following conditions: temperature of 27 ± 3°C and RH (Relative Humidity) of 60 ± 5% and the post-emergence activity was evaluated 7 days after the treatment with the different compositions.

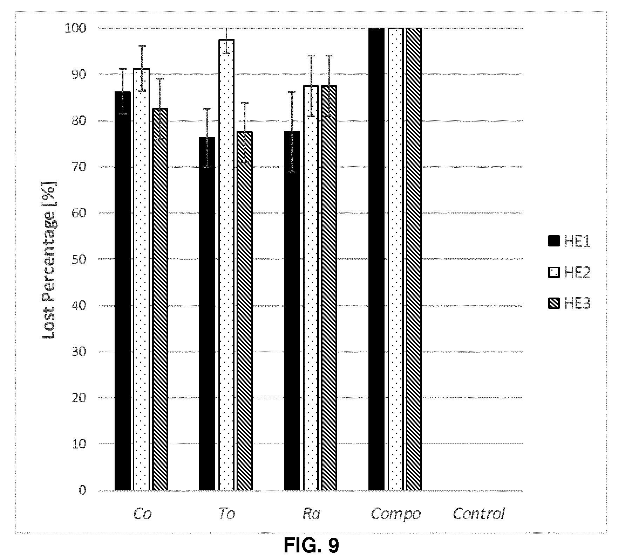

The obtained results are presented in Figure 9. As it can be seen, all the compositions according to the present invention were effective and allowed to reach lost percentages equivalent to those observed with the positive control. These results also show that different oily substances can be used with different essential oils in an effective way.

The present invention has been described in terms of specific embodiments, which are illustrative of the invention and not to be construed as limiting. More generally, it will be appreciated by persons skilled in the art that the present invention is not limited by what has been particularly shown and/or described hereinabove.

Use of the verbs "to comprise", "to include", "to be composed of", or any other variant, as well as their respective conjugations, does not exclude the presence of elements other than those stated.

Use of the article "a", "an" or "the" preceding an element does not exclude the presence of a plurality of such elements.

**Claims**

1. Use of a herbicidal composition comprising at least one essential oil chosen from the group consisting of cinnamon essential oil, citronella essential oil, lemon essential oil, eucalyptus essential oil and mixtures thereof, at least one surfactant, at least one oily substance being a fat fluid/liquid insoluble in water selected from: a vegetable oil or a derivate of a vegetable oil chosen from the group consisting of the fatty esters obtained by esterification or transesterification of vegetable oils, fatty amides obtained by amidification or transamidification of vegetable oils and mixtures thereof, or mixtures thereof, and at least one co-surfactant being a low molecular weight alcohol from methanol to butanol and mixtures thereof, said composition being under the form of an emulsion, for obtaining phytotoxic activity comprising inhibiting seed germination, preventing the resumption of underground or aerial meristem and bud development, or inhibiting the development and growth of the roots, the hypocotyls, the epicotyls, the plantlets or aerial parts of the plant.

2. Use of a herbicidal composition according to claim 1, **characterized in that** said vegetable oil is chosen from the group consisting of hazelnut oil, rapeseed oil, soybean oil, sunflower oil, pistachio oil, olive oil, almond oil, sweet almond oil, peanut oil, canola oil, safflower oil, cottonseed oil, linseed oil, corn oil, grape-seed oil, sesame oil and mixtures thereof.

3. Use of a herbicidal composition according to claim 1 or 2, **characterized in that** said cinnamon essential oil is obtained from the plant Cinnamomun zeylanicum or from the plant Cinnamomun cassia or from the plant Cinnamomun talama or from the plant Cinnamomun aromaticum or from the plant Cinnamomun glaucescens or from the plant Cinnamomun camphora.

4. Use of a herbicidal composition according to any of preceding claims, **characterized in that** said citronela essential oil is obtained from the plant Cymbopogon winterianus or from the plant Cymbopogon flexuosus.

5. Use of a herbicidal composition according to any of preceding claims, **characterized in that** said eucalyptus essential oil is obtained from the plant Eucalyptus citriodora or from the plant Eucalyptus globulus or from the plant Eucalyptus radiata.

6. Use of a herbicidal composition according to any of preceding claims, **characterized in that** said at least one surfactant is a natural surfactant chosen from the group consisting of lecithin, casein, saponines and mixtures thereof.

7. Use of a herbicidal composition according to any of preceding claims, **characterized in that** said at least one surfactant presents a hydrophilic-lipophilic balance (HLB) value comprised between 5 and 10, preferably a HLB value comprised between 7 and 9, more preferably a HLB value equal to 8.

8. Use of a herbicidal composition according to any of preceding claims, **characterized in that** it further comprises an antioxidant agent chosen from the group consisting of tocopherol, ascorbic acid, sodium ascorbate, calcium ascorbate, citric acid and mixtures thereof.

9. Use of a herbicidal composition according to any of preceding claims, **characterized in that** the composition further comprises at least one solvent chosen from the group consisting of water, alcohols, ketones, esters, ethers, polyols, ethyl acetate, propylene carbonate, acetonitrile and mixtures thereof.

10. Use of a herbicidal composition comprising a cinnamon essential oil, a vegetable oil as an oily substance being a fat fluid/liquid insoluble in water, lecithin as a surfactant and/or a surfactant presenting a hydrophilic-lipophilic balance (HLB) value comprised between 5 and 10, and at least one co-surfactant being a low molecular weight alcohol from methanol to butanol and mixtures thereof, for obtaining phytotoxic activity comprising inhibiting seed germination, preventing the resumption of underground or aerial meristem and bud development, or inhibiting the development and growth of the roots, the hypocotyls, the epicotyls, the plantlets or aerial parts of the plant.

11. Herbicidal composition comprising Cinnamomum cassia essential oil, grape oil as an oily substance being a fat fluid/liquid insoluble in water, soy lecithin as a surfactant and ethanol as a co-surfactant, in water.

**Patentansprüche**

1. Verwendung einer herbiziden Zusammensetzung, umfassend mindestens ein ätherisches Öl, ausgewählt aus der Gruppe bestehend aus ätherischem Zimtöl, ätherischem Zitronengrasöl, ätherischem Zitronenöl, ätherischem Eukalyptusöl und Gemischen davon, mindestens ein Tensid, mindestens eine ölige Substanz, die ein(e) in Wasser unlösliche(s) Fettfluid/-flüssigkeit ist, ausgewählt aus:

einem Pflanzenöl oder einem Derivat eines Pflanzenöls ausgewählt aus der Gruppe bestehend aus den durch Veresterung oder Umesterung von Pflanzenölen gewonnenen Fettsäureestern, den durch Amidierung oder Transamidierung von Pflanzenölen gewonnenen Fettsäureamiden und Gemischen davon, oder Gemischen davon, und mindestens einem Co-Tensid, das ein Alkohol mit niedrigem Molekulargewicht von Methanol bis Butanol und Gemischen davon ist, wobei die Zusammensetzung in der Form einer Emulsion vorliegt, zum Erzielen einer phytotoxischen Aktivität, die das Hemmen der Samenkeimung, das Verhindern der Wiederaufnahme der Entwicklung von unterirdischen oder oberirdischen Meristemen und Knospen zu verhindern oder das Hemmen der Entwicklung und des Wachstums der Wurzeln, der Hypokotyle, der Epikotyle, der Pflänzchen oder der oberirdischen Teile der Pflanze umfasst.

2. Verwendung einer herbiziden Zusammensetzung nach Anspruch 1, **dadurch gekennzeichnet, dass** das Pflanzenöl ausgewählt ist aus der Gruppe bestehend aus Haselnussöl, Rapsöl, Sojaöl, Sonnenblumenöl, Pistazienöl, Olivenöl, Mandelöl, Süßmandelöl, Erdnussöl, Canolaöl, Distelöl, Baumwollsamenöl, Leinöl, Maisöl, Traubenkernöl, Sesamöl und Gemischen davon.

3. Verwendung einer herbiziden Zusammensetzung nach Anspruch 1 oder 2, **dadurch gekennzeichnet, dass** das ätherische Zimtöl aus der Pflanze Cinnamomum zeylanicum oder aus der Pflanze Cinnamomum cassia oder aus der Pflanze Cinnamomum talama oder aus der Pflanze Cinnamomum aromaticum oder aus der Pflanze Cinnamomum glaucescens oder aus der Pflanze Cinnamomum camphora gewonnen ist.

4. Verwendung einer herbiziden Zusammensetzung nach irgendeinem der vorstehenden Ansprüche, **dadurch gekennzeichnet, dass** das ätherische Zitronengrasöl aus der Pflanze Cymbopogon winterianus oder aus der Pflanze Cymbopogon flexuosus gewonnen ist.

5. Verwendung einer herbiziden Zusammensetzung nach irgendeinem der vorstehenden Ansprüche, **dadurch gekennzeichnet, dass** das ätherische Eukalyptusöl aus der Pflanze Eucalyptus citriodora oder aus der Pflanze Eucalyptus globulus oder aus der Pflanze Eucalyptus radiata gewonnen ist.

6. Verwendung einer herbiziden Zusammensetzung nach irgendeinem der vorstehenden Ansprüche, **dadurch gekennzeichnet, dass** das mindestens eine Tensid ein natürliches Tensid ist, ausgewählt aus der Gruppe, bestehend aus Lecithin, Casein, Saponinen und Gemischen davon.

7. Verwendung einer herbiziden Zusammensetzung nach irgendeinem der vorstehenden Ansprüche, **dadurch gekennzeichnet, dass** das mindestens eine Tensid einen HLB- (Hydrophilic-Lipophilic Balance) Wert zwischen 5 und 10, bevorzugt einen HLB-Wert zwischen 7 und 9, bevorzugter einen HLB-Wert gleich 8, aufweist.

8. Verwendung einer herbiziden Zusammensetzung nach irgendeinem der vorstehenden Ansprüche, **dadurch gekennzeichnet, dass** sie ferner ein Antioxidationsmittel umfasst, ausgewählt aus der Gruppe bestehend aus Tocopherol, Ascorbinsäure, Natriumascorbat, Calciumascorbat, Zitronensäure und Gemischen davon.

9. Verwendung einer herbiziden Zusammensetzung nach irgendeinem der vorstehenden Ansprüche, **dadurch gekennzeichnet, dass** die Zusammensetzung ferner mindestens ein Lösungsmittel umfasst, ausgewählt aus der Gruppe bestehend aus Wasser, Alkoholen, Ketonen, Estern, Ethern, Polyolen, Ethylacetat, Propylencarbonat, Acetonitril und Gemischen davon.

10. Verwendung einer herbiziden Zusammensetzung, umfassend ein ätherisches Zimtöl, ein Pflanzenöl als eine ölige Substanz, die ein(e) in Wasser unlösliche(s) Fettfluid/- flüssigkeit ist, Lecithin als ein Tensid und/oder ein Tensid, das einen HLB- (Hydrophilic-Lipophilic Balance) Wert zwischen 5 und 10 aufweist, und mindestens ein Co-Tensid, das ein Alkohol mit niedrigem Molekulargewicht von Methanol bis Butanol und Gemischen davon ist, zum Erzielen einer phytotoxischen Aktivität, die das Hemmen der Samenkeimung, das Verhindern der Wiederaufnahme der Entwicklung von unterirdischem oder oberirdischem Meristem und Knospen oder das Hemmen der Entwicklung und des Wachstums der Wurzeln, der Hypokotyle, der Epikotyle, der Pflänzchen oder der oberirdischen Teile der Pflanze umfasst.

11. Herbizide Zusammensetzung, umfassend ätherisches Öl von Cinnamomum cassia, Traubenkernöl als eine ölige Substanz, die ein(e) in Wasser unlösliche(s) Fettfluid/- flüssigkeit ist, Sojalecithin als ein Tensid und Ethanol als ein Co-Tensid, in Wasser.

**Revendications**

1. Utilisation d'une composition herbicide comprenant au moins une huile essentielle choisie dans le groupe constitué de l'huile essentielle de cannelle, l'huile essentielle de citronnelle, l'huile essentielle de citron, l'huile essentielle d'eucalyptus et leurs mélanges, au moins un tensioactif, au moins une substance huileuse étant un fluide/liquide gras insoluble dans l'eau choisi parmi : une huile végétale ou un dérivé d'une huile végétale choisi dans le groupe constitué des esters gras obtenus par estérification ou transestérification d'huiles végétales, des amides gras obtenus par amidification ou transamidification d'huiles végétales et de leurs mélanges, ou de leurs mélanges, et d'au moins un co-tensioactif étant un alcool de faible poids moléculaire allant du méthanol au butanol et de leurs mélanges, ladite composition se présentant sous la forme d'une émulsion,
destinée à obtenir une activité phytotoxique comprenant l'inhibition de la germination des graines, la prévention de la reprise du développement des méristèmes souterrains ou aériens et des bourgeons, ou l'inhibition du développement et de la croissance des racines, des hypocotyles, des épicotyles, des plantules ou des parties aériennes de la plante.

2. Utilisation d'une composition herbicide selon la revendication 1, **caractérisée en ce que** ladite huile végétale est choisie dans le groupe constitué de l'huile de noisette, l'huile de colza, l'huile de soja, l'huile de tournesol, l'huile de pistache, l'huile d'olive, l'huile d'amande, l'huile d'amande douce, l'huile d'arachide, l'huile de canola, l'huile de carthame, l'huile de coton, l'huile de lin, l'huile de maïs, l'huile de pépins de raisin, l'huile de sésame et leurs mélanges.

3. Utilisation d'une composition herbicide selon la revendication 1 ou 2, **caractérisée en ce que** ladite huile essentielle de cannelle est obtenue à partir de la plante Cinnamomum zeylanicum ou de la plante Cinnamomum cassia ou de la plante Cinnamomum talama ou de la plante Cinnamomum aromaticum ou de la plante Cinnamomum glaucescens ou de la plante Cinnamomum camphora.

4. Utilisation d'une composition herbicide selon l'une quelconque des revendications précédentes, **caractérisée en ce que** ladite huile essentielle de citronnelle est obtenue à partir de la plante Cymbopogon winterianus ou de la plante Cymbopogon flexuosus.

5. Utilisation d'une composition herbicide selon l'une quelconque des revendications précédentes, **caractérisée en ce que** ladite huile essentielle d'eucalyptus est obtenue à partir de la plante Eucalyptus citriodora ou de la plante Eucalyptus globulus ou de la plante Eucalyptus radiata.

6. Utilisation d'une composition herbicide selon l'une quelconque des revendications précédentes, **caractérisée en ce que** ledit au moins un tensioactif est un tensioactif naturel choisi dans le groupe constitué de la lécithine, la caséine, les saponines et leurs mélanges.

7. Utilisation d'une composition herbicide selon l'une quelconque des revendications précédentes, **caractérisée en ce que** ledit au moins un tensioactif présente une valeur d'équilibre hydrophile-lipophile (HLB) comprise entre 5 et 10, de préférence une valeur HLB comprise entre 7 et 9, plus préférablement une valeur HLB égale à 8.

8. Utilisation d'une composition herbicide selon l'une quelconque des revendications précédentes, **caractérisée en ce qu'**elle comprend en outre un agent antioxydant choisi dans le groupe constitué du tocophérol, l'acide ascorbique, l'ascorbate de sodium, l'ascorbate de calcium, l'acide citrique et leurs mélanges.

9. Utilisation d'une composition herbicide selon l'une quelconque des revendications précédentes, **caractérisée en ce que** la composition comprend en outre au moins un solvant choisi dans le groupe constitué de l'eau, les alcools, les cétones, les esters, les éthers, les polyols, l'acétate d'éthyle, le carbonate de propylène, l'acétonitrile et leurs mélanges.

10. Utilisation d'une composition herbicide comprenant une huile essentielle de cannelle, une huile végétale en tant que substance huileuse étant un fluide/liquide gras insoluble dans l'eau, de la lécithine en tant que tensioactif et/ou un tensioactif présentant une valeur d'équilibre hydrophile-lipophile (HLB) comprise entre 5 et 10, et d'au moins un co-tensioactif étant un alcool de faible poids moléculaire allant du méthanol au butanol et leurs mélanges, pour obtenir une activité phytotoxique comprenant l'inhibition de la germination des graines, la prévention de la reprise du développement des méristèmes souterrains ou aériens et des bourgeons, ou l'inhibition du développement et de la croissance des racines, des hypocotyles, des épicotyles, des plantules ou des parties aériennes de la plante.

11. Composition herbicide comprenant de l'huile essentielle de Cinnamomum cassia, de l'huile de raisin en tant que substance huileuse étant un fluide/liquide gras insoluble dans l'eau, de la lécithine de soja en tant qu'agent tensioactif et de l'éthanol en tant que co-tensioactif, dans de l'eau.

**FIG. 1**

**FIG. 2**

**FIG. 3**

**FIG. 4**

FIG. 5

FIG. 6

**FIG. 7**

**FIG. 8**

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009099022 A
- EP 2737799 A
- US 2014023733 A
- US 2008269177 A
- EP 2735229 A
- US 2009169656 A
- BR PI0700941
- CN 104472570
- US 2015051298 A
- CN 101385559

**Non-patent literature cited in the description**

- **TERJUNG et al.** Influence of droplet size on the efficacy of oil-in-water emulsions loaded with phenolic antimicrobials. *Food & Function*, 01 January 2012, vol. 3 (3), 290-301